# EUROPÄISCHE PATENTSCHRIFT

(11) **EP 1 989 090 B1**
(45) Veröffentlichungstag und Bekanntmachung des Hinweises auf die Patenterteilung: **24.01.2018**
(21) Anmeldenummer: 07711412.2
(22) Anmeldetag: 31.01.2007
(51) Int. Cl.: B60T 17/08, F16J 15/32, F16J 15/56, F16D 65/14

(54) **FEDERSPEICHERBREMSZYLINDER MIT EINER MIT AUSNEHMUNGEN VERSEHEN FEDERSPEICHERBREMSKOLBENDICHTUNG**
SPRING-BRAKE CYLINDER COMPRISING A SPRING-BRAKE PISTON SEAL THAT IS PROVIDED WITH RECESSES
CYLINDRE DE FREIN À RESSORT COMPORTANT UN JOINT POUR LE PISTON DE FREIN À RESSORT POURVU D'ÉVIDEMENTS

(30) Priorität: 03.02.2006 DE 102006005031
(43) Veröffentlichungstag der Anmeldung: 12.11.2008
(73) Patentinhaber: KNORR-BREMSE Systeme für Nutzfahrzeuge GmbH, 80809 München (DE)
(72) Erfinder: LE MER, Sébastien, F-14140 Auquainville (FR)
(74) Vertreter: Mattusch, Gundula
(86) Internationale Anmeldenummer: PCT/EP2007/000811
(87) Internationale Veröffentlichungsnummer: WO 2007/090547

(56) Entgegenhaltungen:
- EP-A- 0 692 651
- EP-A1- 0 279 930
- DE-A1- 4 011 739
- DE-U1-202005 018 886

## Beschreibung

### Stand der Technik

Die Erfindung geht aus von einem Federspeicherbremszylinder mit einem durch eine Speicherfeder betätigbaren Federspeicherbremskolben, welcher auf der einen Seite eine Federspeicherbremskammer und auf der anderen Seite eine die Speicherfeder aufnehmende Federkammer begrenzt, wobei der Federspeicherbremskolben eine als Bewegungsdichtung ausgebildete Federspeicherbremskolbendichtung trägt, welche mit wenigstens einem Teil ihrer Arbeitsfläche gegen eine Lauffläche des Federspeicherbremszylinders dichtet, gemäß dem Oberbegriff von Anspruch 1.

Ein kombinierter Betriebsbrems- und Federspeicherbremszylinder mit einem gattungsgemäßen Federspeicherbremszylinder ist beispielsweise aus der DE 40 11 739 A1 bekannt. Der Federspeicherbremskolben weist eine Kolbenstange auf, welche ein Entlüftungsventil trägt, das eine Strömungsverbindung zwischen der Federkammer und der Betriebsbremskammer herstellt oder sperrt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Feststellbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort wird sie durch den Dichtspalt zwischen der Arbeitsfläche der Federspeicherbremskolbendichtung und der Lauffläche des Federspeicherzylinders sowie die Gehäusedichtung in die Atmosphäre gepresst, was störende Pfeifgeräusche verursacht.

Der vorliegenden Erfindung liegt die Aufgabe zugrunde, einen Federspeicherbremszylinder der eingangs erwähnten Art derart weiter zu entwickeln, dass die in bestimmten Betriebssituationen auftretenden, auf Luftströmungen zurückzuführenden Geräusche reduziert oder vermieden werden.

Diese Aufgabe wird erfindungsgemäß durch die Merkmale von Anspruch 1 gelöst.

### Vorteile der Erfindung

Die Anmelderin hat herausgefunden, dass für den Fall, dass die Arbeitsfläche der Federspeicherbremskolbendichtung mit wenigstens einer radialen Ausnehmung versehen wird, die störenden Strömungsgeräusche drastisch reduziert oder gänzlich vermieden werden.

In der Ausnehmung können sich die von der Federkammer her einströmenden Luftschwingungen durch Reflexion totlaufen, wodurch diese gedämpft werden. Weiterhin ändern sich die Verformungen der Federspeicherbremskolbendichtung, wenn diese mit der Druckluft aus der Federkammer beaufschlagt wird, in der Weise, dass der Spalt zwischen der Arbeitsfläche und der Lauffläche im Bereich der Ausnehmung größer wird und mit dem größeren Strömungsquerschnitt keine Pfeifgeräusche mehr entstehen können.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind mehrere, in Umfangsrichtung voneinander beabstandete Ausnehmungen vorgesehen sind, wobei die Ausnehmungen am Umfang beispielsweise gleich verteilt angeordnet sind.

Nicht zuletzt können die Ausnehmungen bezogen auf die Bewegung des Federspeicherbremskolbens als axiale Nuten ausgebildet sein, welche als Sacklöcher zur Federkammer hin geöffnet und zur Federspeicherbremskammer hin geschlossen sind.

Wenn die axialen Nuten jeweils mit einer sich im Querschnitt verengenden Einlaufzone und mit einer sich im Querschnitt verengenden Auslaufzone versehen sind, ergibt sich ein gleichmäßigerer Strömungsverlauf und die Neigung zum Strömungsabriss wird reduziert, was sich wiederum positiv auf das Geräuschverhalten auswirkt.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt:
- Fig.1: eine Querschnittsdarstellung einer Federspeicherbremskolbendichtung gemäß einer bevorzugten Ausführungsform der Erfindung,
- Fig.2: eine Schnittdarstellung der Federspeicherbremskolbendichtung von Fig.1 entlang der Linie II-II;
- Fig.3: eine Schnittdarstellung der Federspeicherbremskolbendichtung von Fig.1 entlang der Linie III-III,
- Fig.4: eine Schnittdarstellung der Federspeicherbremskolbendichtung von Fig.3 entlang der Linie IV-IV,
- Fig.5: eine Schnittdarstellung eines kombinierten Betriebsbrems- und Federspeicherbremszylinders mit der Federspeicherbremskolbendichtung gemäß Fig.1 bis Fig.4.

### Beschreibung des Ausführungsbeispiels

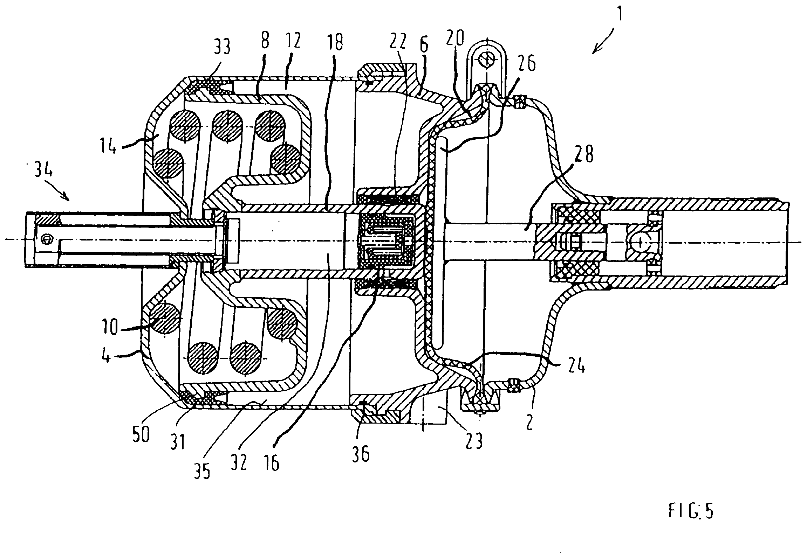

In Fig.5 ist zur beispielhaften Erläuterung der Erfindung ein kombinierter Betriebsbrems- und Federspeicherbremszylinder 1, nachfolgend Kombizylinder genannt, dargestellt. Der Kombizylinder besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab.

Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Kolbenstange 18 verbunden, welche sich durch die Zwischenwand 6 in eine Betriebsbremskammer 20 des Betriebsbremszylinders 2 erstreckt. Eine in der Zwischenwand 6 eingesetzte Dichtung 22 dichtet gegenüber der Außenwand der Kolbenstange 18 während deren Längsbewegung ab. In die Betriebsbremskammer 20 mündet ein Einlass 23, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegengesetzter Seite ein Druckstück in Form eines Membrantellers 26 vorgesehen ist. Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Eine sich einerseits am Membranteller 26 und andererseits am Boden des Betriebsbremszylinders 2 abstützende, nicht gezeigte Rückholfeder sorgt dafür, dass die Druckstange 28 bei entlüfteter Betriebsbremskammer 20 in die Lösestellung zurückgeholt wird.

Der Federspeicherbremskolben 8 trägt eine als Bewegungsdichtung ausgebildete Federspeicherbremskolbendichtung 31, welche mit wenigstens einem Teil ihrer Arbeitsfläche 33 gegen eine zugeordnete Lauffläche 35 des Federspeicherbremszylinders 4 dichtet. Unter Arbeitsfläche 33 soll die Fläche verstanden werden, an welcher die Relativbewegung zur Lauffläche 35 des Federspeicherbremszylinders 4 stattfindet, im vorliegenden Fall also die radial äußere Umfangsfläche der Federspeicherbremskolbendichtung 31.

Das Entlüftungsventil 16 ist in dem vom Federspeicherbremskolben 8 weg weisenden Ende der Kolbenstange 18 angeordnet und genauer in deren Innenraum 32 aufgenommen. Dort ist zwar weiterhin eine hier nicht weiter interessierende Notlöseinrichtung 34 angeordnet, jedoch kann der Innenraum 32 der Kolbenstange 18 mit der Federkammer 14 kommunizieren. Das Entlüftungsventil 16 des kombinierten Betriebsbrems- und Federspeicherzylinders 1 dient dazu, eine Strömungsverbindung zwischen der Federkammer 14 und der Betriebsbremskammer 20 herzustellen oder zu sperren. Insbesondere hat das Entlüftungsventil 16 die Aufgabe, beim Lösen der Feststellbremse den durch das Zurückfahren des Federspeicherbremskolbens 8 und dadurch sich verkleinernde Volumen der Federkammer 14 dort entstehenden Überdruck abzubauen, indem es durch diesen in Öffnungsstellung geschaltet wird und eine Strömungsverbindung zwischen der Federkammer 14 und der Betriebsbremskammer 20 herstellt.

Unter eingangs genannten Betriebsbedingungen kann Druckluft von der Betriebsbremskammer 20 über das geöffnete Entlüftungsventil 16 in die Federkammer 14 überströmen. Von dort entweicht sie an der Federspeicherbremskolbendichtung 31 vorbei in die Federspeicherbremskammer 12, was störende Pfeifgeräusche verursacht. Von der Federspeicherbremskammer 12 gelangt die Druckluft dann über eine zwischen dem Betriebsbremszylinder 2 und dem Federspeicherbremszylinder 4 angeordnete Gehäusedichtung 36 in die Atmosphäre, wie anhand von Fig.5 leicht vorstellbar ist

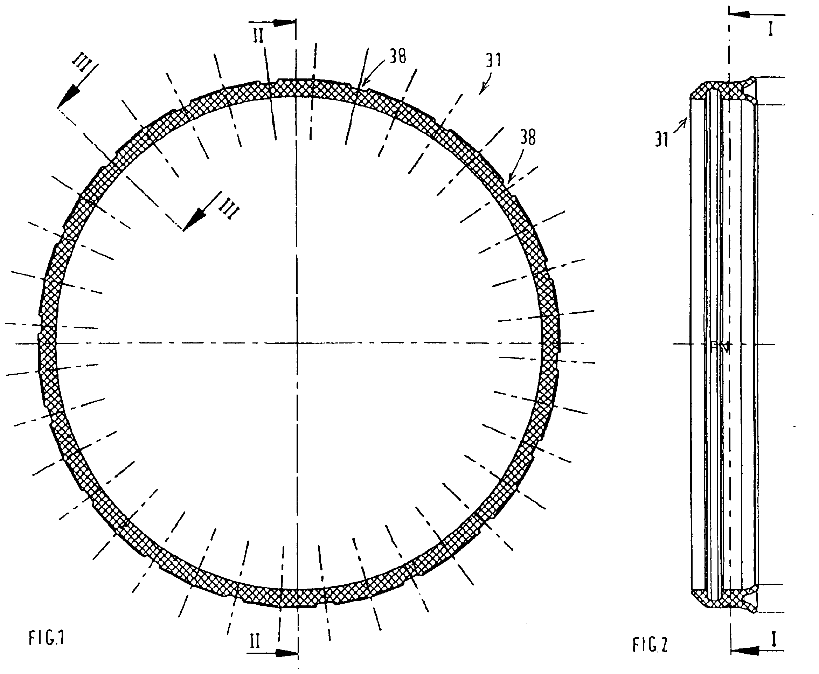

Um die störenden Pfeifgeräusche zu reduzieren oder gänzlich zu vermeiden, ist die Arbeitsfläche 33 der Federspeicherbremskolbendichtung 31 mit wenigstens einer radialen Ausnehmung 38 versehen. Gemäß einer bevorzugten, in Fig.1 gezeigten Ausführungsform können mehrere, in Umfangsrichtung voneinander beabstandete Ausnehmungen 38 vorgesehen sein, wobei die Ausnehmungen 38 am Umfang beispielsweise gleich verteilt angeordnet sind. Im Bereich der Ausnehmungen 38 kontaktiert die Federspeicherbremskolbendichtung 31 folglich die Lauffläche 35 des Federspeicherbremszylinders 4 nicht, sondern ist von dieser radial beabstandet.

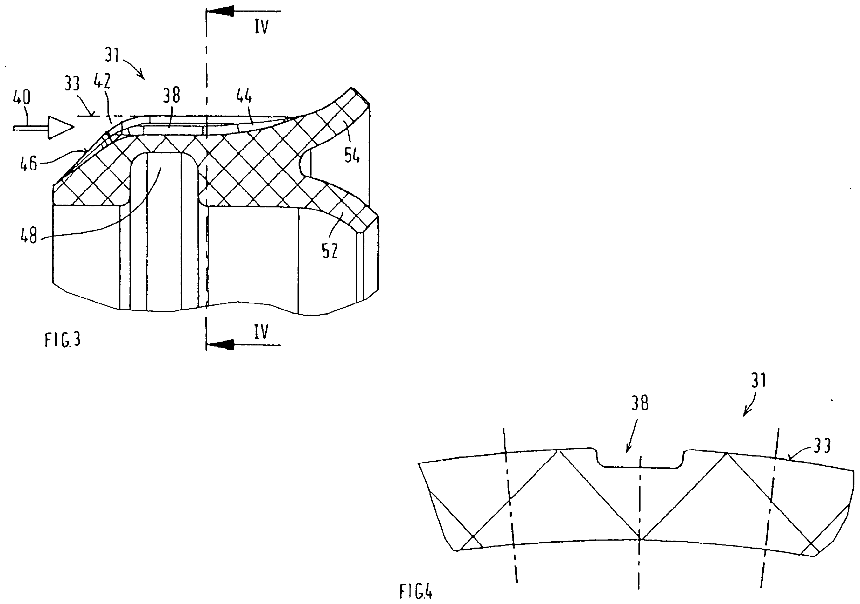

Die Ausnehmungen 38 sind beispielsweise bezogen auf die Bewegung des Federspeicherbremskolbens 8 oder bezogen auf die in Fig.3 durch einen Pfeil 40 gekennzeichnete Strömungsrichtung der Druckluft als axiale Nuten ausgebildet, welche als Sacklöcher zur Federkammer 14 hin geöffnet und zur Federspeicherbremskammer 12 hin geschlossen sind, wie aus Fig.3 und Fig.4 hervorgeht. Diese axialen Nuten 38 sind vorzugsweise jeweils mit einer sich im Querschnitt verengenden Einlaufzone 42 und mit einer sich im Querschnitt verengenden Auslaufzone 44 versehen. Um die Verengung der Einlaufzone 42 zu realisieren, ist die zur Federkammer 14 weisende Stirnfläche 46 der Federspeicherbremskolbendichtung 31 abgeschrägt. Diese schräge Stirnfläche 46 bildet zugleich einen Anschlag für die endseitig ebenso schräg eingezogene Lauffläche 35 des Federspeicherbremszylinders 4, wie aus Fig.5 hervorgeht. Die Auslaufzone 44 der Sacklochnut 38 mündet in die Arbeitsfläche 33 der Federspeicherbremskolbendichtung 31, welche in Fig.3 durch eine gestrichelte Linie gekennzeichnet ist.

Die Federspeicherbremskolbendichtung 31 ist weiterhin an ihrer radial inneren Umfangsfläche mit einer weiteren Ausnehmung 48 versehen, in welche ein am Federspeicherbremskolben 8 angeordneter Radialvorsprung 50 eingreift. Weil die Federspeicherbremskolbendichtung 31 aus einem elastischen Material, vorzugsweise aus einem Elastomer besteht, kann sie unter elastischer radialer Aufweitung auf den Radialvorsprung 50 aufgesetzt und dort formschlüssig fixiert werden.

Weiterhin kann die Federspeicherbremskolbendichtung 31 an ihrer zur Federspeicherbremskammer 12 weisenden Stirnfläche zwei sich radial elastisch aufspreizende Dichtlippen 52, 54 aufweisen, von welchen die innere Dichtlippe 52 gegen die radial äußere Umfangsfläche des Federspeicherbremskolbens 8 und die äußere Dichtlippe 54 gegen die Lauffläche 35 des Federspeicherbremszylinders 4 spannend dichtet.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Kolbenstange
- 20: Betriebsbremskammer
- 22: Dichtung
- 23: Einlass
- 24: Membrane
- 26: Membranteller
- 28: Druckstange
- 31: Federspeicherbremskolbendichtung
- 32: Innenraum
- 33: Arbeitsfläche
- 34: Notlöseeinrichtung
- 35: Lauffläche
- 36: Gehäusedichtung
- 38: Ausnehmung
- 40: Pfeil
- 42: Einlaufzone
- 44: Auslaufzone
- 46: Stirnfläche
- 48: Ausnehmung
- 50: Radialvorsprung
- 52: Dichtlippe
- 54: Dichtlippe

## Patentansprüche

1. Federspeicherbremszylinder (4) mit einem durch eine Speicherfeder (10) betätigbaren Federspeicherbremskolben (8), welcher auf der einen Seite eine Federspeicherbremskammer (12) und auf der anderen Seite eine die Speicherfeder (10) aufnehmende Federkammer (14) begrenzt, wobei der Federspeicherbremskolben (8) eine als Bewegungsdichtung ausgebildete Federspeicherbremskolbendichtung (31) trägt, welche mit wenigstens einem Teil ihrer Arbeitsfläche (33) gegen eine Lauffläche (35) des Federspeicherbremszylinders (4) dichtet, **dadurch gekennzeichnet, dass** die Arbeitsfläche (33) der Federspeicherbremskolbendichtung (31) mit wenigstens einer radialen Ausnehmung (38) versehen ist.

2. Betriebsbrems- und Federspeicherbremszylinder nach Anspruch 1, **dadurch gekennzeichnet, dass** die Arbeitsfläche (33) durch eine radial äußere Umfangsfläche der Federspeicherbremskolbendichtung (31) gebildet wird.

3. Federspeicherbremszylinder nach Anspruch 1 oder 2, **dadurch gekennzeichnet, dass** mehrere, in Umfangsrichtung voneinander beabstandete Ausnehmungen (38) vorgesehen sind.

4. Federspeicherbremszylinder nach Anspruch 3, **dadurch gekennzeichnet, dass** die Ausnehmungen (38) am äußeren Umfang der Federspeicherbremskolbendichtung (31) im wesentlichen gleich verteilt angeordnet sind.

5. Federspeicherbremszylinder nach Anspruch 4, **dadurch gekennzeichnet, dass** die Ausnehmungen (38) bezogen auf die Bewegung des Federspeicherbremskolbens (8) als axiale Nuten ausgebildet, welche als Sacklöcher zur Federkammer (14) hin geöffnet und zur Federspeicherbremskammer (12) hin geschlossen sind.

6. Federspeicherbremszylinder nach Anspruch 5, **dadurch gekennzeichnet, dass** die axialen Nuten (38) jeweils mit einer sich im Querschnitt verengenden Einlaufzone (42) versehen sind.

7. Federspeicherbremszylinder nach Anspruch 5 oder 6, **dadurch gekennzeichnet, dass** die axialen Nuten (38) jeweils mit einer sich im Querschnitt verengenden Auslaufzone (44) versehen sind.

8. Federspeicherbremszylinder nach wenigstens einem der vorhergehenden Ansprüche, **dadurch gekennzeichnet, dass** die Federspeicherbremskolbendichtung (31) an ihrer radial inneren Umfangsfläche mit einer Ausnehmung (48) versehen ist, in welche ein am Federspeicherbremskolben (8) ausgebildeter Radialvorsprung (50) eingreift.

9. Federspeicherbremszylinder nach wenigstens einem der vorhergehenden Ansprüche, **dadurch gekennzeichnet, dass** die Federspeicherbremskolbendichtung (31) an ihrer zur Federspeicherbremskammer (12) weisenden Stirnfläche zwei sich radial elastisch aufspreizende Dichtlippen (52, 54) aufweist.

10. Federspeicherbremszylinder nach wenigstens einem der vorhergehenden Ansprüche, **dadurch gekennzeichnet, dass** er mit einem Betriebsbremsbremszylinder (1) kombiniert ist, der mit einer in einem Gehäuse des Betriebsbremszylinders (2) angeordneten druckbeaufschlagbaren Membran (24) versehen ist, welche auf der einen Seite eine mit einem Betriebsbremsdruck beaufschlagbare Betriebsbremskammer (20) und auf der anderen Seite eine Rückholfeder aufnehmende Kammer begrenzt.

## Claims

1. Spring brake cylinder (4), comprising a spring brake piston (8), which is actuable by an accumulator spring (10) and bounds on the one side a spring brake chamber (12) and on the other side a spring chamber (14) accommodating the accumulator spring (10), wherein the spring brake piston (8) has a spring brake piston seal (31) designed as a moving seal, which seals with at least a part of its working surface (33) against a sliding surface (35) of the spring brake cylinder (4), **characterised in that** the working surface (33) of the spring brake piston seal (31) is provided with at least one radial recess (38).

2. Service and spring brake cylinder according to claim 1, **characterised in that** the working surface (33) is represented by a radially outward circumferential surface of the spring brake piston seal (31).

3. Spring brake cylinder according to claim 1 or 2, **characterised in that** several recesses (38) spaced in the circumferential direction are provided.

4. Spring brake cylinder according to claim 3, **characterised in that** the recesses (38) are distributed substantially evenly on the outer circumference of the spring brake piston seal (31).

5. Spring brake cylinder according to claim 4, **characterised in that** the recesses (38) are, relative to the movement of the spring brake piston (8), designed as axial grooves which are open towards the spring chamber (14) as blind holes and closed towards the spring brake chamber (12).

6. Spring brake cylinder according to claim 5, **characterised in that** each of the axial grooves (38) is provided with an entry zone (42) which narrows in cross-section.

7. Spring brake cylinder according to claim 5 or 6, **characterised in that** each of the axial grooves (38) is provided with an exit zone (44) which narrows in cross-section.

8. Spring brake cylinder according to one or more of the preceding claims, **characterised in that** the spring brake piston seal (31) is provided on its radially inward circumferential surface with a recess (48), with which a radial projection (50) formed on the spring brake piston (8) engages.

9. Spring brake cylinder according to one or more of the preceding claims, **characterised in that** the spring brake piston seal (31) has on its end face facing the spring brake chamber (12) two sealing lips (52, 54), which expand elastically in the radial direction.

10. Spring brake cylinder according to one or more of the preceding claims, **characterised in that** it is combined with a service brake cylinder (1) provided with a diaphragm (24), which is located in a housing of the service brake cylinder (2), can be pressurised and bounds on the one side a service brake chamber (20) to which a service brake pressure can be applied and on the other side a chamber which accommodates a return spring.

## Revendications

1. Cylindre (4) de frein à ressort accumulateur, comprenant un piston (8) de frein à ressort accumulateur, qui peut être actionné par un ressort (10) accumulateur et qui délimite, d'un côté, une chambre (12) de frein à ressort accumulateur et, de l'autre côté, une chambre (14) de ressort recevant le ressort (10) accumulateur, le piston (8) de frein à ressort accumulateur portant une garniture (31) de piston de frein à ressort accumulateur, qui est constituée sous la forme d'une étanchéité de mouvement et qui, par au moins une partie de sa surface (33) de travail, vient, de manière étanche, sur une surface (35) de roulement du cylindre (4) de frein à ressort accumulateur, **caractérisé en ce que** la surface (33) de travail de la garniture (31) de piston de frein à ressort accumulateur est pourvue d'au moins un évidement (38) radial.

2. Cylindre de frein de service et de frein à ressort accumulateur suivant la revendication 1, **caractérisé en ce que** la surface (33) de travail est formée par une surface périphérique extérieure radialement de la garniture (31) de piston de frein à ressort accumulateur.

3. Cylindre de frein à ressort accumulateur suivant la revendication 1 ou 2, **caractérisé en ce qu'**il est prévu plusieurs évidements (38) à distance les uns des autres dans la direction périphérique.

4. Cylindre de frein à ressort accumulateur suivant la revendication 3, **caractérisé en ce que** les évidements (38) sont répartis d'une manière sensiblement uniforme sur le pourtour extérieur de la garniture (31) de piston de frein à ressort accumulateur.

5. Cylindre de frein à ressort accumulateur suivant la revendication 4, **caractérisé en ce que** les évidements (38) sont, rapporté au déplacement (8) du frein à ressort accumulateur, constitués sous la forme de rainures axiales qui, sous forme de trous borgnes, sont ouvertes vers la chambre (14) de ressort et sont fermées vers la chambre (12) de frein à ressort accumulateur.

6. Cylindre de frein à ressort accumulateur suivant la revendication 5, **caractérisé en ce que** les rainures (38) axiales sont pourvues chacune d'une zone (42) d'entrée se rétrécissant en section transversale.

7. Cylindre de frein à ressort accumulateur suivant la revendication 5 ou 6, **caractérisé en ce que** les rainures (38) axiales sont pourvues chacune d'une zone (44) de sortie se rétrécissant en section transversale.

8. Cylindre de frein à ressort accumulateur suivant au moins l'une des revendications précédentes, **caractérisé en ce que** la garniture (31) de piston de frein à ressort accumulateur est pourvue, sur sa surface périphérique intérieure radialement, d'un évidement (48), dans lequel pénètre une saillie (50) radiale constituée sur le piston (8) de frein à ressort accumulateur.

9. Cylindre de frein à ressort accumulateur suivant au moins l'une des revendications précédentes, **caractérisé en ce que** la garniture (31) de piston de frein à ressort accumulateur a, sur sa surface frontale, tournée vers la chambre (12) de frein à ressort accumulateur, deux lèvres (52, 54) d'étanchéité s'écartant élastiquement radialement.

10. Cylindre de frein à ressort accumulateur suivant au moins l'une des revendications précédentes, **caractérisé en ce qu'**il est combiné un cylindre (1) de frein de service, qui est pourvu d'une membrane (24) pouvant être soumise à une pression et disposée dans un boîtier du cylindre (2) de frein de service, membrane qui délimite d'un côté, une chambre (20) de frein de service pouvant être soumise à une pression de service, et de l'autre côté, une chambre de réception d'un ressort de rappel.
